# EUROPÄISCHE PATENTANMELDUNG

(11) **EP 0 615 059 A1**
(43) Veröffentlichungstag der Anmeldung: **14.09.1994**
(21) Anmeldenummer: 94102765.8
(22) Anmeldetag: 24.02.1994
(51) Int. Cl.: F02B 37/00, F02B 27/04, F02B 37/12

(54) **Brennkraftmaschine mit mindestens zwei Zylinderbänken**

(30) Priorität: 09.03.1993 DE 4307380
(71) Anmelder: ADAM OPEL AG, D-65423 Rüsselsheim (DE)
(72) Erfinder: Janthur, Ingo, Dipl.-Ing., D-65428 Rüsselsheim (DE)
(74) Vertreter: Kümpfel, Heinz, Dipl.-Ing.

(57) **Zusammenfassung**

Die Erfindung betrifft eine Brennkraftmaschine (1) mit mindestens zwei Zylinderbänken (2, 3), die alle über einen einzigen Abgasturbolader (11) aufgeladen werden. Der Turbolader (11) wird jedoch nur vom Abgas einer ersten Zylinderbank (2) beaufschlagt. Das Abgas der anderen Zylinderbänke (3) wird mit dem Rohr (22) und über eine Ejektordüse (23) einer Ejektorkammer (21) zugeleitet, in welcher auch die Leitung (20) von der Turbinenabströmseite (19) des Abgasturboladers (11) führt. Die Strömungsenergie der Abgase aus dem Rohr (22) setzt sich in der Ejektorkammer (21) in eine Druckdifferenz um, welche sich als erhöhtes Druckgefälle auf die Turbine (13) des Abgasturboladers (11) auswirkt und seine Leistung erhöht. Durch die Ejektordüse (23) wird der Abgasgegendruck in gleicher Weise angehoben wie durch die Turbine des Abgasturboladers (11), so daß alle Zylinder (4) gleichmäßig belastet sind. Eine solche Brennkraftmaschine, bei der die Zylinderbänke vorteilhaft in V-Form angeordnet sind, bei der aber jede andere Anordnung der Zylinderbänke auch denkbar ist, kann in sehr kompakter Art ausgeführt sein und eignet sich so besonders zur Unterbringung in begrenzten Einbauräumen, z. B. in Motorräumen von Kraftfahrzeugen.

## Beschreibung

Die Erfindung betrifft eine Brennkraftmaschine mit mindestens zwei Zylinderbänken, wobei die Zylinderbänke über einen Abgasturbolader aufgeladen werden.

Eine solche Brennkraftmaschine mit zwei Zylinderbänken ist mit DE-PS 31 50 001 beschrieben. Bei dieser bekannten Brennkraftmaschine befindet sich ein Abgassammelrohr zwischen den in V-Form zueinander angeordneten Zylinderbänken, von dem aus ein bzw. mehrere stirnseitig an der Brennkraftmaschine angeordnete Turbolader mit Abgas beaufschlagt werden. Um Energieverluste im Abgasleitungssystem zu vermeiden, wird hier vorgeschlagen, das die Turbine des Turboladers verlassende Abgas durch den vom Abgassammelrohr nicht ausgefüllten Querschnitt des tunnelartigen Raumes zu führen, der zwischen den Zylinderbänken gebildet ist.

Damit kann zwar einer ungewollten Abkühlung der Abgase vor dem Turbolader entgegengewirkt werden. Der Verlauf der Abgasführung ist unter strömungstechnischen Gesichtspunkten aber sehr ungünstig, da dabei auf eine Vielzahl von motorgegebenen Komponenten Rücksicht genommen werden muß. Außerdem steht damit der Raum zwischen den Zylinderbänken nicht mehr für die an sich vorteilhafte Anordnung des Einlaßsystemes sowie weiterer Komponenten, wie z. B. Öl-Wasser-Wärmetauscher, Gasberuhigungsräume für Motorentlüftung und dergleichen, zur Verfügung.

Es ist durch die DE-OS 38 24 346 weiterhin bekannt, bei einer Brennkraftmaschine mit zwei Zylinderbänken einen Abgasturbolader nur der einen Zylinderbank zuzuordnen und die Baukomponenten dieser Zylinderbank entsprechend der damit möglichen höheren Leistung gegenüber der anderen Zylinderbank auch entsprechend stärker auszuführen.

Damit kann die Brennkraftmaschine zwar mit nur einem Turbolader auskommen, der auch relativ günstig in bezug auf die Abgaskrümmernähe und auf das Package in einem Fahrzeug angeordnet werden kann. Von erheblichem Nachteil ist jedoch die unterschiedliche Leistungsabforderung an den zwei Zylinderbänken, welche zu daraus resultierenden unterschiedlich bemaßten Baukomponenten führt. Damit erhöht sich die notwendige Teilevielfalt erheblich, was zu Kostenerhöhungen in der Fertigung, bei der Lagerhaltung und beim Service führt.

Der Erfindung liegt die Aufgabe zugrunde, eine Brennkraftmaschine mit mindestens zwei Zylinderbänken zu schaffen, bei welcher ein Turbolader auf die Zylinderbänke einwirkt, in unmittelbarer Verbindung mit außenliegenden Abgaskrümmern angeordnet sein kann und so den Raum zwischen den Zylinderbänken nicht beeinträchtigt sowie eine gute Raumausnutzung bei der Anordnung einer solchen Brennkraftmaschine in einem Kraftfahrzeug ermöglicht.

Erfindungsgemäß wird diese Aufgabe dadurch gelöst, daß die Turbine des Abgasturboladers an ihrer Zuströmseite vom Abgas einer ersten Zylinderbank beaufschlagt ist und die Turbinenabströmseite mit einer Ejektorkammer verbunden ist, in welcher die Abgase der weiteren Zylinderbänke über eine Ejektordüse in Richtung einer gemeinsamen Auslaßöffnung einströmen und so in der Ejektorkammer einen gegenüber der Turbinenabströmseite geringeren Druck erzeugt, wobei der mit der Turbine verbundene Lader mit seiner Druckseite die Einlaßkanäle aller Zylinderbänke beaufschlagt.

Der Abgasturbolader ist vorzugsweise in unmittelbarer Nähe des Abgaskrümmers der ersten Zylinderbank angeordnet.

Dabei kann es besonders vorteilhaft sein, wenn das Gehäuse des Abgasturboladers und der Abgaskrümmer der ersten Zylinderbank ein gemeinsames Teil bilden.

Zwischen dem Lader und den Einlaßkanälen kann in an sich bekannter Weise ein Ladeluftkühler vorgesehen sein.

Eine bevorzugte Ausführungsform der Erfindung ist nachstehend anhand einer schematisierten Zeichnung beschrieben.

Eine Brennkraftmaschine 1 weist zwei Zylinderbänke 2, 3 auf, die in V-Form zueinander angeordnet sind und die jeweils mit mehreren, hier jeweils drei Zylindern 4 versehen sind. Zwischen den Zylinderbänken 2, 3 ist ein Einlaßtrakt 5 angeordnet, von dem aus die Einlaßkanäle 6 zu den einzelnen Zylindern 4 abzweigen. Von den Zylindern 4 weg führen Abgaskanäle 7, die an jeder der beiden Zylinderbänke 2, 3 von einem Abgaskrümmer 8, 9 geführt sind. Der Abgaskrümmer 8 der ersten Zylinderbank 2 ist unmittelbar verbunden mit dem Gehäuse 10 eines Abgasturboladers 11, auf dessen gemeinsamer Welle 12 die Räder einer Turbine 13 sowie eines Laders 14 gelagert sind. Zu dem Lader 14 führt ein Ansaugrohr 15, dem eine nicht dargestellte Ansaugluftfilter vorangestellt ist. Die Druckseite 16 des Laders 14 ist über ein Rohr 17 mit dem Einlaßtrakt 5 verbunden. Im Verlauf des Rohres 17 ist ein Ladeluftkühler 18 angeordnet. Der Sammelkanal des Abgaskrümmers 8 der ersten Zylinderbank 2 führt zu der Turbine 13 des Abgasturboladers 10. Von der Turbinenabströmseite 19 führt eine Leitung 20 zu einer Ejektorkammer 21. In diese Ejektorkammer 21 führt ein weiteres Rohr 22, welches vom Sammelkanal des Abgaskrümmers 9 der zweiten Zylinderbank 3 kommt. In der Mündung dieses Rohres 22 im Inneren der Ejektorkammer 21 befindet sich eine Ejektordüse 23, die in Strömungsrichtung des von der Leitung 20 in die Ejektorkammer 21 einströmenden Abgases auf eine gemeinsame Auslaßöffnung 24 gerichtet ist. Die Gasströmung im Ladungswechselsystem der Brennkraftmaschine 1 ist durch Pfeile angedeutet.

Bei einem Betrieb der Brennkraftmaschine 1 mit Aufladung durch den Abgasturbolader 11 wird Luft am Ansaugrohr 15 angesaugt, durch den Lader 14 verdichtet und durch das Rohr 17 zuerst dem Ladeluftkühler 18 und dann dem Einlaßtrakt 5 zugeführt. Hier kann bei einem Ottomotor die nicht dargestellte Gemischaufbereitung erfolgen. Aus dem Einlaßtrakt 5 wird die Luft durch die Einlaßkanäle 6 auf die Zylinder 4 beider Zylinderbänke 2 und 3 verteilt, die somit gleichmäßig aufgeladen werden. Jeder Zylinder 4 kann somit annähernd gleiche Leistung erbringen. Nach dem Arbeitsprozeß der Zylinderladungen gelangt das Abgas aus den Zylindern 4 durch die Abgaskanäle 7 aus der Zylinderbank 2 in den Abgaskrümmer 8 und aus der Zylinderbank 3 in den Abgaskrümmer 9. Der Abgaskrümmer 8 ist unmittelbar verbunden mit dem Gehäuse 10 des Abgasturboladers 11, so daß das aus der Zylinderbank 2 kommende Abgas auf kürzestem Wege und ohne Abkühlung zur Turbine 13 gelangt. Energieverluste können somit weitgehend vermieden werden. Die diesem Abgasstrom innewohnende Energie wird damit in hohem Maße durch die Turbine 13 in Bewegungsenergie umgesetzt, welche über die Welle 12 auf den Lader 14 übertragen wird. Der Lader 14 erzeugt den erforderlichen Ladedruck auf der Druckseite 16, der sich über das Rohr 17 zum Einlaßtrakt 5 fortsetzt. Das aus der Turbine 13 austretende Abgas fließt durch die Leitung 20 zu der Ejektorkammer 21. In diese mündet auch das Rohr 22, welches das vom Abgaskrümmer 9 der Zylinderbank 3 gesammelte Abgas führt. Am Ende des Rohres 22 befindet sich eine Ejektordüse 23, welche auf die Auslaßöffnung 24 der Ejektorkammer 21 gerichtet ist. Damit entsteht in der Ejektorkammer 21 ein niedrigerer Druck, der sich über die Leitung 20 bis zur Turbinenabströmseite 19 fortsetzt und so das Druckgefälle an der Turbine 13 vergrößert. Dadurch wird die Leistung der Turbine 13 erhöht, womit erreicht wird, daß die dem Abgas aus der Zylinderbank 3 innewohnende Energie in einem erheblichen Umfang ebenso wie die des Abgases der Zylinderbank 2 zur Verdichtung der Ladeluft genutzt wird.

Durch die Anordnung der Ejektordüse 23 am Ende des Rohres 22, welches die Abgase der Zylinderbank 3 führt, steigt der Abgasgegendruck an den Zylindern 4 der Zylinderreihe 3 an, und zwar bei richtiger Auslegung etwa auf den gleichen Wert, wie er an den Zylindern 4 der ersten Zylinderbank 2 vor dem Abgasturbolader 11 ansteigt. Beide Zylinderreihen 2 und 3 sind somit gleichmäßig belastet, d. h. alle Zylinder arbeiten annähernd unter gleichen Betriebszuständen und können so auch mit baugleichen Bauteilen gefertigt werden.

Als besonderer Vorteil der Erfindung muß die Möglichkeit gesehen werden, einen Abgasturbolader, der direkt mit einem Abgaskrümmer einer Zylinderbank verbunden ist, auf mehrere Zylinderbänke wirken zu lassen und dabei auch deren Abgasenergie, obwohl sich in ihrer Nähe kein Turbolader befindet, zur Ladeluftverdichtung mit heranzuziehen. Dadurch kann eine erfindungsgemäße Brennkraftmaschine besser als bekannte gattungsgemäße Brennkraftmaschinen mit Turboladern in begrenzten Raumverhältnissen, wie beispielsweise dem Motorraum eines Kraftfahrzeuges, untergebracht werden. Es ergibt sich auch bei Brennkraftmaschinen mit mehreren Zylinderbänken die Möglichkeit, das Gehäuse des Turboladers zusammen mit dem Abgaskrümmer einteilig auszuführen. Die Erfindung ist auch auf Brennkraftmaschinen anwendbar, die mehr als zwei Zylinderbänke aufweisen, wobei die Anordnung der Zylinderbänke zueinander unwesentlich ist. So sind neben Brennkraftmaschinen mit der vorher beschriebenen V-förmigen Anordnung von zwei Zylinderbänken natürlich auch Brennkraftmaschinen mit X- und H-förmig zueinander angeordneten Zylinderbänken ebenso nach der Erfindung ausrüstbar wie eine Brennkraftmaschine, deren Zylinderbänke in einer Reihe hintereinander angeordnet sind, wie z. B. die ersten drei Zylinder sowie die zweiten drei Zylinder einer 6-Zylinder-Reihenbrennkraftmaschine, wobei die ersten drei Zylinder eine erste Zylinderbank und die zweiten drei Zylinder eine zweite Zylinderbank bilden. Dabei kann jeweils eine Zylinderbank direkt mit dem Abgasturbolader verbunden sein, während die anderen über einen Ejektor indirekt auf die Turboladerleistung Einfluß nehmen.

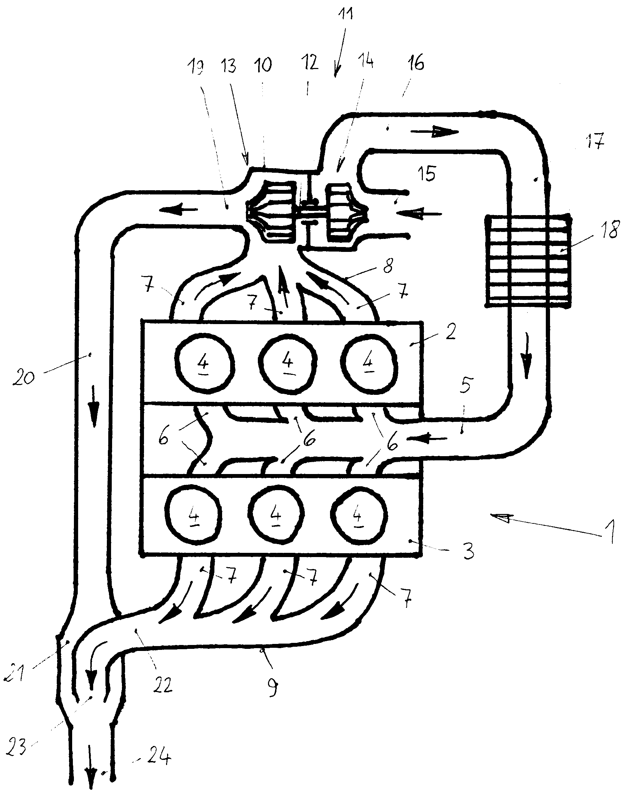

## Patentansprüche

1. Brennkraftmaschine mit mindestens zwei Zylinderbänken, wobei die Zylinderbänke über einen Abgasturbolader aufgeladen werden, **dadurch gekennzeichnet,** daß die Turbine (13) des Abgasturboladers (11) an ihrer Zuströmseite vom Abgas einer ersten Zylinderbank (2) beaufschlagt ist und die Turbinenabströmseite (19) mit einer Ejektorkammer (21) verbunden ist, in welcher die Abgase der weiteren Zylinderbänke (3) über eine Ejektordüse (23) in Richtung einer gemeinsamen Auslaßöffnung (24) einströmen und so in der Ejektorkammer (23) einen gegenüber der Turbinenabströmseite (19) geringeren Druck erzeugt, wobei der mit der Turbine (13) verbundene Lader (14) mit seiner Druckseite (16) die Einlaßkanäle (6) aller Zylinderbänke (2, 3) beaufschlagt.

2. Brennkraftmaschine nach Anspruch 1, **dadurch gekennzeichnet,** daß der Abgasturbolader (11) in unmittelbarer Nähe des Abgaskrümmers (8) der ersten Zylinderbank (2) angeordnet ist.

3. Brennkraftmaschine nach Anspruch 1 und 2, **dadurch gekennzeichnet,** daß das Gehäuse (10) des Abgasturboladers (11) und der Abgaskrümmer (8) einer ersten Zylinderbank (2) ein gemeinsames Teil bilden.

4. Brennkraftmaschine nach Anspruch 1 bis 3, **dadurch gekennzeichnet,** daß zwischen dem Lader (14) und den Einlaßkanälen (6) ein Ladeluftkühler (18) vorgesehen ist.
